# EUROPÄISCHE PATENTSCHRIFT

(11) **EP 1 907 247 B1**
(45) Veröffentlichungstag und Bekanntmachung des Hinweises auf die Patenterteilung: **15.11.2017**
(21) Anmeldenummer: 06776311.0
(22) Anmeldetag: 20.07.2006
(51) Int. Cl.: B60S 9/04, B65D 90/12, B66F 3/02

(54) **STÜTZWINDE**
SUPPORT JACK
BEQUILLE

(30) Priorität: 23.07.2005 DE 102005034555
(43) Veröffentlichungstag der Anmeldung: 09.04.2008
(73) Patentinhaber: JOST-Werke Deutschland GmbH, 63263 Neu-Isenburg (DE)
(72) Erfinder: MÜLLER, Gerald, 63179 Obertshausen (DE); SEIDEL, Günter, 64560 Riedstadt (DE); ALGÜERA, José, 63739 Aschaffenburg (DE)
(74) Vertreter: Mehler Achler
(86) Internationale Anmeldenummer: PCT/EP2006/007145
(87) Internationale Veröffentlichungsnummer: WO 2007/012426

(56) Entgegenhaltungen:
- WO-A-81/01691
- US-A- 2 815 962

## Beschreibung

Die Erfindung betrifft eine Stützwinde, insbesondere zum Abstützen von Aufliegern, mit einem in seiner Höhe teleskopartig verfahrbaren, eine äußere Hülse und eine innere Hülse aufweisenden Abstützelement, wobei jede Hülse einen rechteckigen Querschnitt mit jeweils vier Seitenwänden aufweist. Die Erfindung bezieht sich auch auf eine Anordnung einer Stützwinde an einem Fahrzeug.

Derartige Stützwinden werden insbesondere zum Abstützen von Aufliegern eines Sattelschleppers verwendet. Diese Stützwinden werden aus Vierkantrohren hergestellt, die ineinander gesteckt werden, wie dies beispielsweise aus der EP 1 104 369 B1 oder EP 0 513 973 B1 bekannt ist.

Das Dokument WO81/01691 offenbart eine Stützwinde gemäss dem Oberbegriff des Anspruchs 1, bzw. eine Anordnung einer Stützwinde an der Unterseite eines Aufliegers gemäß dem Oberbegriff des Anspruchs 10. Bei den Stützwinden muss eine je nach Belastung erforderliche Biegesteifigkeit gewährleistet werden, was über entsprechende Wandstärken der Vierkantrohre bzw. über entsprechend große Querschnittsabmessungen erreicht wird.

Eine weitere bekannte Maßnahme zur Verbesserung der Biegesteifigkeit besteht darin, in der Innenhülse eine dritte Hülse, nämlich eine Versteifungshülse, vorzusehen. Der Innenraum der Stützwinde wird dadurch erheblich verkleinert und das Gesamtgewicht erhöht.

Aufgabe der Erfindung ist es, eine Stützwinde bereitzustellen, die bei mindestens gleichgroßer Biegesteifigkeit wie bei herkömmlichen Stützwinden ohne zusätzliche Versteifungshülsen auskommt. Es ist auch Aufgabe, eine biegesteife Anordnung einer Stützwinde an einem Fahrzeug anzugeben.

Diese Aufgabe wird dadurch gelöst, dass mindestens eine Seitenwand mindestens der Innenhülse eine zusätzliche Wandplatte aufweist oder aus einer Wandplatte besteht, an der die beiden angrenzenden Seitenwände angeschweisst sind.

Es hat sich herausgestellt, dass die Biegesteifigkeit der gesamten Stützwinde deutlich verbessert werden kann, wenn mindestens die Innenhülse mindestens eine Wandplatte aufweist, die entweder an dem herkömmlichen Vierkantrohr - vorzugsweise an der Außenseite - befestigt ist oder die selbst eine Seitenwand der Innenhülse bildet.

Im zweiten Fall werden die benachbarten Seitenwände mit dieser Wandplatte verbunden, wodurch eine stabilere Ausführung geschaffen wird, als wenn die Wandplatte integraler Bestandteil eines Vierkantrohres ist, wie dies bei herkömmlichen Innenhülsen der Fall ist. Es wird dadurch möglich, u. a. eine rechtwinklige Verbindung zwischen dieser Wandplatte und den benachbarten Seitenwänden herzustellen, was gegenüber den runden Eckbereichen eines Vierkantrohres Stabilitätsvorteile mit sich bringt.

Vorzugsweise werden die angrenzenden Seitenwände der Hülse an der Wandplatte angeschweißt. Hierbei können die Schweißnähte im inneren der Hülse liegen oder bevorzugt an der Außenseite der Hülse angeordnet sein, was insbesondere unter fertigungstechnischen Gesichtspunkten von Vorteil ist.

Es hat sich als vorteilhaft herausgestellt, wenn die Wandplatte gegenüber den angrenzenden Seitenwänden übersteht. Dies bedeutet, dass die benachbarten Seitenwände an die Plattenfläche anstoßen und dort befestigt, insbesondere angeschweißt sind. Die Biegesteifigkeit bei Belastung parallel zur Plattenebene wird dadurch weiter verbessert.

Eine verbesserte Versteifung der Stützwinde wird ferner dadurch erreicht, dass sowohl die Innenhülse als auch die Außenhülse mindestens eine solche Wandplatte aufweisen.

Um eine Innenhülse mit einer Wandplatte, die gegenüber den benachbarten Seitenwänden vorsteht, in eine Außenhülse einsetzen zu können, ist vorgesehen, dass die an die vorstehende Wandplatte der Innenhülse angrenzenden Seitenwände der Außenhülse jeweils ein ausgestellten Wandabschnitt aufweisen. Es ist auch möglich, dass die entsprechenden Seitenwände der Innenhülse über ausgestellte Wandabschnitte verfügen. Durch die ausgestellten Wandabschnitte wird die Steifigkeit parallel zur Wandplatte verbessert.

Die betreffende Hülse kann auch aus vier Wandplatten aufgebaut sein. Es wird damit die Biegesteifigkeit in zwei Raumrichtungen verbessert.

Weitere Ausführungsformen sehen vor, dass die Hülse ein U-Profil oder zwei Winkelprofile in Verbindung mit einer Wandplatte aufweist.

Alle Ausführungen können auch mit ausgestellten Wandabschnitten kombiniert sein, wobei pro Hülse ein bis vier ausgestellte Wandabschnitte vorgesehen sein können, je nachdem, in welcher Richtung die Biegesteifigkeit zusätzlich verbessert werden soll.

Auch kann die Hülse ein Vierkantrohr aufweisen, wie dies bei herkömmlichen Stützwinden der Fall ist. In diesem Fall wird an mindestens einer Außenseite des Vierkantrohres eine Wandplatte befestigt und zwar an derjenigen Außenseite, deren Biegesteifigkeit verbessert werden soll.

Da die Stützwinden hinsichtlich ihrer Biegesteifigkeit bei einer Anordnung an der Unterseite eines Fahrzeuges nicht in allen Richtungen gleich stark belastet werden, ist bei der Anordnung der Stützwinde darauf zu achten, dass mindestens eine erfindungsgemäße Wandplatte parallel zur Fahrtrichtung ausgerichtet ist. Die Belastung hinsichtlich der Biegesteifigkeit wird nämlich in oder entgegengesetzt der Fahrtrichtung auf die Stützwinde ausgeübt, wenn sich die Stützwinde in Stützstellung befindet.

Es ist weiterhin von Vorteil, wenn die Wandplatte zur Innenseite des Fahrzeuges weist. In diesem Fall befindet sich die Versteifung am Ort des Lastangriffspunktes nämlich dort, wo die Stützwinde auch am Fahrzeug befestigt ist.

Vorzugsweise sind die Hülsen aus Stahl oder einem anderen hochfesten Material gefertigt.

Beispielhafte Ausführungsformen der Erfindungen werden nachfolgend anhand der Zeichnungen näher erläutert. Es zeigen:
- Fig. 1: einen Vertikalschnitt durch eine Stützwinde,
- Fig. 2: einen Horizontalschnitt gemäß der Linie C-C durch die in Figur 1 gezeigte Stützwinde,
- Fign. 3a, 3b: Querschnitte durch zwei Hülsen gemäß zweier Ausführungsformen,
- Fign. 4 - 8: Querschnitte durch Stützwinden gemäß weiterer Ausführungsformen.

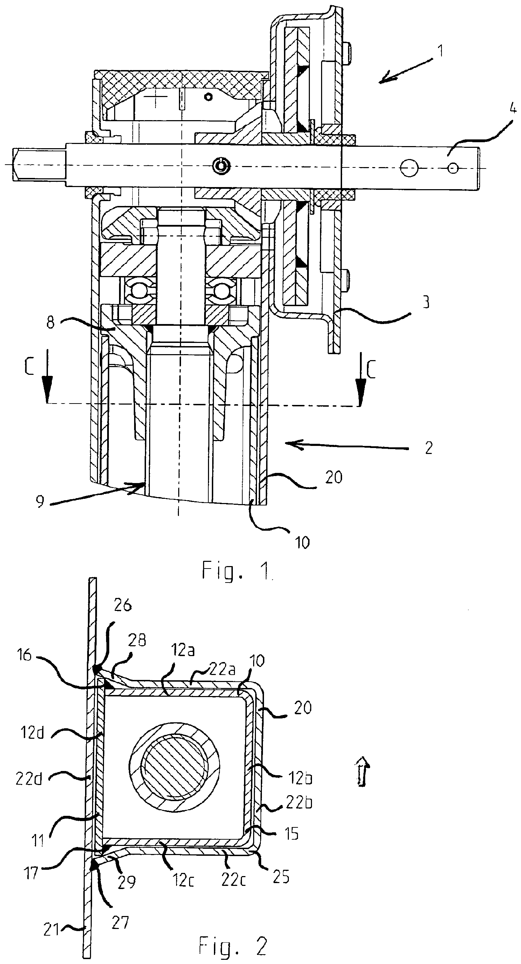

In der Figur 1 ist das Oberteil einer Stützwinde 1 im Vertikalschnitt dargestellt. Die Stützwinde 1 besitzt ein Abstützelement 2 mit einer Innenhülse 10 und einer Außenhülse 20, wobei die Innenhülse 10 nach unten teleskopierbar ist. Hierzu ist eine Spindel 9 und eine Spindelmutter 8 vorgesehen, die sich auf der Innenhülse 10 abstützt. Des Weiteren ist ein Getriebe und ein Getriebegehäuse 3 vorgesehen sowie eine Eingangswelle 4. Der Getriebeaufbau ist für die vorliegende Erfindung nicht von Bedeutung.

In der Figur 2 ist ein Schnitt durch die in Figur 1 gezeigte Stützwinde längs der Linie C-C dargestellt. Es ist zu sehen, dass die Innenhülse 10 ein U-Profil 15 aufweist, das die Seitenwände 12a, b, c bildet und das an einer Wandplatte 11 befestigt ist, die die Seitenwand 12d bildet. Die Wandplatte 11 steht gegenüber dem U-Profil 15 und somit gegenüber den Seitenwänden 12a und 12c nach außen vor. Die Schweißnähte 16 und 17 sind außen angeordnet. Die Verbreiterung der Wandplatte 11 gegenüber dem U-Profil 15 hat den Vorteil, dass die Verschweißung von außen vorgenommen werden kann.

Die Außenhülse 20 besitzt eine hieran angepasste Querschnittskontur und besteht aus einer Wandplatte 21, die die Seitenwand 22d bildet, und ebenfalls einem U-Profil 25, das die Seitenwände 22a-c bildet. Die ausgestellten Wandabschnitte 28, 29 sind über außen liegende Schweißnähte 26, 27 an der Oberfläche der deutlich breiteren Wandplatte 21 befestigt sind, die wiederum an einem Befestigungselement eines nicht dargestellten Fahrzeugs montiert werden kann. Diese Ausführungsform hat den Vorteil, dass in Fahrtrichtung, die durch den Pfeil gekennzeichnet ist, eine besonders gute Versteifung erzielt wird.

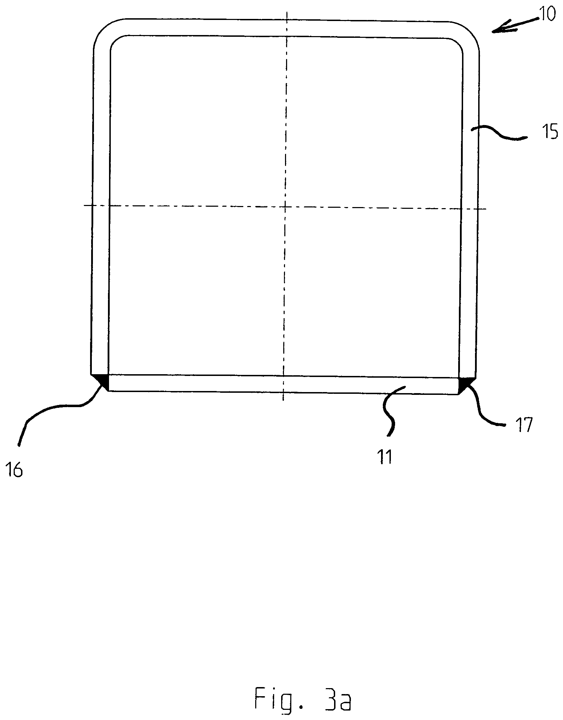

In der Figur 3a ist eine weitere Ausgestaltung einer Hülse 10 im Querschnitt dargestellt. Die Wandplatte 11 ist verkürzt dargestellt und erstreckt sich lediglich über den Innenquerschnitt der Hülse 10. Es gibt somit keinen seitlichen Überstand. Die Schweißnähte 16, 17 befinden sich an den Stirnflächen von Wandplatte 11 und U-Profil 15. Diese Ausführung hat den Vorteil, dass die Wandplatte 11 kürzer ausgeführt wird und die Biegesteifigkeit gegenüber einem Vierkantrohr größer ist.

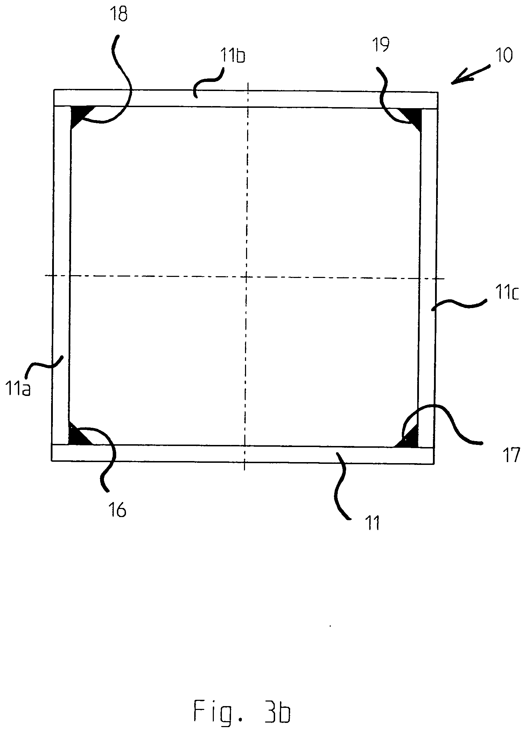

In der Figur 3b ist eine Ausführungsform dargestellt, die aus vier einzelnen Wandplatten 11, 11a, 11b und 11c gebildet ist. Hierbei liegen die Wandplatten 11 und 11b an den Stirnflächen der Wandplatten 11a und 11c an. Die Schweißnähte 16 bis 19 sind an der Innenseite der Hülse 10 angeordnet. Diese Ausführung hat den Vorteil, dass die Biegesteifigkeit gegenüber einem Vierkantrohr in allen Richtungen größer ist.

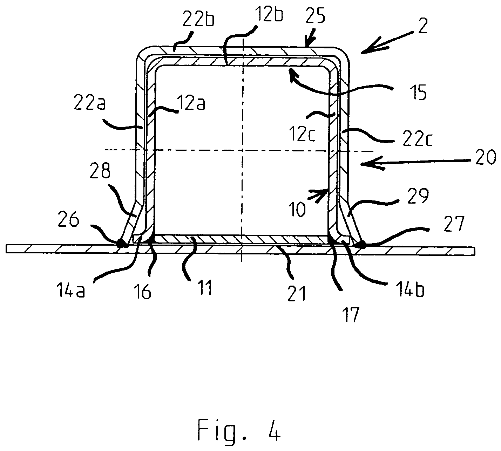

In der Figur 4 ist eine weitere Ausführungsform dargestellt, bei der die Innenhülse 10 im Bereich der Wandplatte 11, deren Länge dem Innenquerschnitt der Hülse 10 entspricht, seitlich nach außen abgewinkelte Endabschnitte 14a, b aufweist. Diese Ausführungsform hat den Vorteil, dass durch die Biegeradien die Biegesteifigkeit erhöht wird.

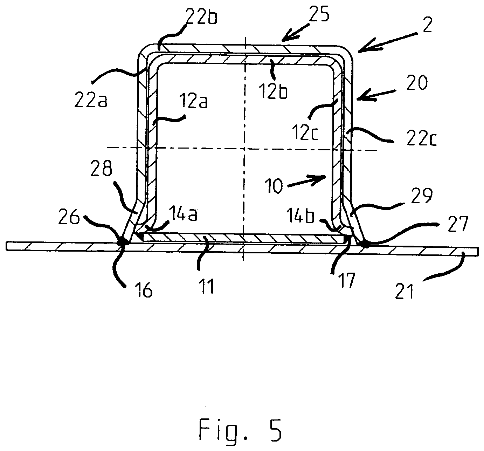

Von dem Abstützelement 2 gemäß der Figur 4 unterscheidet sich das Abstützelement 2 gemäß der Figur 5 dadurch, dass die Wandplatte 11 breiter ausgeführt ist und somit an der Außenseite der abgewinkelten Endabschnitte 14a, b der Innenhülse 10 anliegt. Diese modifizierte Ausführungsform hat den Vorteil, dass die Biegefestigkeit durch die verlängerte Wandplatte 11 und die Endabschnitte14a, b erhöht wird.

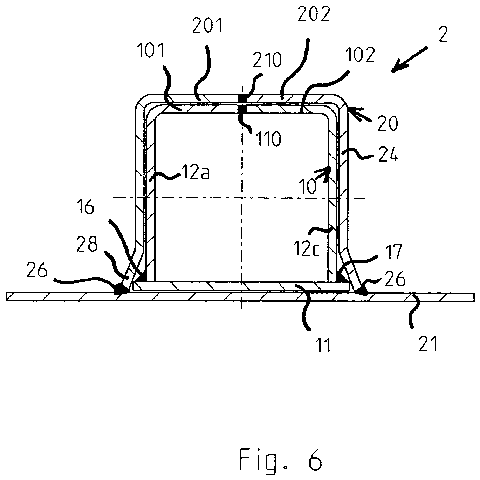

In der Figur 6 ist eine weitere Ausführungsform dargestellt, bei der die Wandplatte 11 gegenüber den Seitenwänden 12a und 12c vorsteht, und damit auch eine Montagemöglichkeit an einem nicht dargestellten Fahrzeug bietet. Sowohl die Innenhülse 10 als auch die Außenhülse 20 ist aus Winkelprofilen 101, 102 bzw. 201, 202 und Wandplatten 11, 21 gebildet. Dies bedingt zusätzliche Schweißnähte 110, 210, wo die beiden Winkelprofile 101, 102 und 201, 202 aneinander stoßen. Die Ausführung der Winkelprofile hat den Vorteil, dass diese Profilkombination aus einfachen Vormaterialien gefügt werden kann.

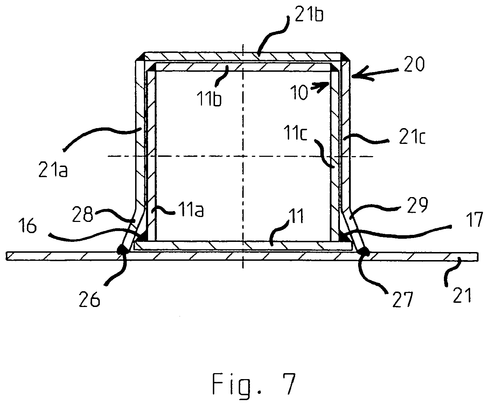

In der Figur 7 ist eine weitere Ausführungsform dargestellt, bei der sowohl die Innenhülse 10 als auch die Außenhülse 20 aus einzelnen Wandplatten 11, 11a, 11b, 11c und 21, 21a, 21b, 21c gebildet ist.

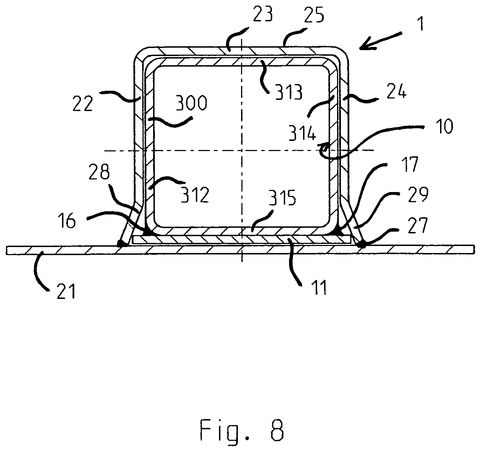

In der Figur 8 ist eine weitere Ausführungsform dargestellt, bei der die Innenhülse 10 ein herkömmliches Vierkantrohr 300 aufweist, das die Seitenwände 312-315 bildet und das an der Außenseite der Seitenwand 315 an eine Wandplatte 11 angeschweißt ist.

### Bezugszeichenliste

- 1: Stützwinde
- 2: Abstützelement
- 3: Getriebegehäuse
- 4: Eingangswelle
- 8: Spindelmutter
- 9: Spindel

- 10: Innenhülse
- 11, 11a, b, c: Wandplatte
- 12a, b, c, d: Seitenwand
- 14a, b: Endabschnitt
- 15: U-Profil
- 16: Schweißnaht
- 17: Schweißnaht
- 18: Schweißnaht
- 19: Schweißnaht

- 20: Außenhülse
- 21, 21a, b, c: Wandplatte
- 22a, b, c, d: Seitenwand
- 25: U-Profil
- 26: Schweißnaht
- 27: Schweißnaht
- 28: ausgestellter Wandabschnitt
- 29: ausgestellter Wandabschnitt

- 101: Winkelprofil
- 102: Winkelprofil
- 110: Schweißnaht
- 201: Winkelprofil
- 202: Winkelprofil
- 210: Schweißnaht

- 300: Vierkantrohr
- 312: Seitenwand
- 313: Seitenwand
- 314: Seitenwand
- 315: Seitenwand

## Patentansprüche

1. Stützwinde (1), insbesondere zum Abstützen von Aufliegern, mit einem in seiner Höhe teleskopartig verfahrbaren, eine Außenhülse (20) und eine Innenhülse (10) aufweisenden Abstützelement (2), wobei jede Hülse (10, 20) einen rechteckigen Querschnitt mit jeweils vier Seitenwänden (12a-d, 22a-d, 312-315) aufweist, **dadurch gekennzeichnet, dass** mindestens eine Seitenwand (12d, 22d, 315) mindestens der Innenhülse (10) eine zusätzliche Wandplatte (11, 21) aufweist oder aus einer Wandplatte (11, 21) besteht, an der die beiden angrenzenden Seitenwände (12a, 12c, 22a, 22c, 312, 314) angeschweißt sind.

2. Stützwinde nach Anspruch 1, **dadurch gekennzeichnet, dass** die Schweißnaht (16, 17) im Innern der Hülse (10) liegt.

3. Stützwinde nach Anspruch 1 oder 2, **dadurch gekennzeichnet, dass** die Schweißnaht (16, 17, 26, 27) an der Außenseite der Hülse (10, 20) liegt.

4. Stützwinde nach einem der Ansprüche 1 bis 3, **dadurch gekennzeichnet, dass** die Wandplatte (11, 21) gegenüber den angrenzenden Seitenwänden (12a, 12c, 22a, 22c) übersteht.

5. Stützwinde nach einem der Ansprüche 1 bis 4, **dadurch gekennzeichnet, dass** sowohl die Innenhülse (10) als auch die Außenhülse (20) jeweils mindestens eine Wandplatte (11, 21) aufweisen.

6. Stützwinde nach einem der Ansprüche 1 bis 5, **dadurch gekennzeichnet, dass** die an die Wandplatte (11) der Innenhülse (10) angrenzenden Seitenwände (12a, 12c) und/oder die an die Wandplatte (21) angrenzenden Seitenwände (22a, 22c) der Außenhülse (20) jeweils einen ausgestellten Wandabschnitt (28, 29) aufweisen.

7. Stützwinde nach einem der Ansprüche 1 bis 6, **dadurch gekennzeichnet, dass** die Hülse (10, 20) vier Wandplatten (11, 11a-c, 21, 21a-c) aufweist.

8. Stützwinde nach einem der Ansprüche 1 bis 6, **dadurch gekennzeichnet, dass** die Hülse (10, 20) eine Wandplatte (11, 21) und ein U-Profil (15, 25) oder eine Wandplatte (11, 21) und zwei Winkelprofile (101, 102, 201, 202) aufweist.

9. Stützwinde nach einem der Ansprüche 1 bis 6, **dadurch gekennzeichnet, dass** die Hülse (10, 20) ein Vierkantrohr (300) aufweist, wobei an mindestens einer Außenseite mindestens eine Wandplatte (11, 21) befestigt ist.

10. Anordnung einer Stützwinde an der Unterseite eines Fahrzeugs, insbesondere eines Aufliegers, wobei die Stützwinde ein in seiner Höhe teleskopartig verfahrbare Außenhülse (20) und eine Innenhülse (10) aufweisendes Abstützelement (2) aufweist, wobei jede Hülse (10, 20) einen rechteckigen Querschnitt mit jeweils vier Seitenwänden (12a-d, 22a-d, 312-315) aufweist, **dadurch gekennzeichnet, dass** mindestens eine Seitenwand (12d, 22d, 315) mindestens der Innenhülse (10) eine zusätzliche Wandplatte (11, 21) aufweist oder aus einer Wandplatte (11, 21) besteht, an der die beiden angrenzenden Seitenwände (12a, 12c, 22a, 22c) angeschweißt sind und dass mindestens eine Wandplatte (11, 21) parallel zur Fahrtrichtung ausgerichtet ist.

11. Anordnung nach Anspruch 10, **dadurch gekennzeichnet, dass** die Wandplatte (11, 21) zur Innenseite des Fahrzeugs weist.

## Claims

1. Support winch (1), in particular for supporting semitrailers, having a support element (2) which can be moved in a telescope-like manner in terms of the height thereof and which has an outer sleeve (20) and an inner sleeve (10), wherein each sleeve (10, 20) has a rectangular cross-section with four side walls (12a-d, 22a-d, 312-315), **characterised in that** at least one side wall (12d, 22d, 315) of at least the inner sleeve (10) has an additional wall plate (11, 21) or comprises a wall plate (11, 21), to which the two adjacent side walls (12a, 12c, 22a, 22c, 312, 314) are welded.

2. Support winch according to claim 1, **characterised in that** the weld seam (16, 17) is located inside the sleeve (10).

3. Support winch according to claim 1 or 2, **characterised in that** the weld seam (16, 17, 26, 27) is located at the outer side of the sleeve (10, 20).

4. Support winch according to any one of claims 1 to 3, **characterised in that** the wall plate (11, 21) protrudes with respect to the adjacent side walls (12a, 12c, 22a, 22c).

5. Support winch according to any one of claims 1 to 4, **characterised in that** both the inner sleeve (10) and the outer sleeve (20) each have at least one wall plate (11, 21).

6. Support winch according to any one of claims 1 to 5, **characterised in that** the side walls (12a, 12c) adjacent to the wall plate (11) of the inner sleeve (10) and/or the side walls (22a, 22c) of the outer sleeve (20) adjacent to the wall plate (21) each have a flared wall portion (28, 29).

7. Support winch according to any one of claims 1 to 6, **characterised in that** the sleeve (10, 20) has four wall plates (11, 11a-c, 21, 21a-c).

8. Support winch according to any one of claims 1 to 6, **characterised in that** the sleeve (10, 20) has a wall plate (11, 21) and a U-shaped profile (15, 25) or a wall plate (11, 21) and two angular profiles (101, 102, 201, 202).

9. Support winch according to any one of claims 1 to 6, **characterised in that** the sleeve (10, 20) has a square pipe (300), wherein at least one wall plate (11, 21) is secured to at least one outer side.

10. Arrangement of a support winch at the lower side of a vehicle, in particular a semitrailer, wherein the support winch has a support element (2) which can be moved in a telescope-like manner in terms of the height thereof and which has an outer sleeve (20) and an inner sleeve (10), wherein each sleeve (10, 20) has a rectangular cross-section with four side walls (12a-d, 22a-d, 312-315), **characterised in that** at least one side wall (12d, 22d, 315) of at least the inner sleeve (10) has an additional wall plate (11, 21) or comprises a wall plate (11, 21), to which the two adjacent side walls (12a, 12c, 22a, 22c) are welded and **in that** at least one wall plate (11, 21) is orientated parallel with the travel direction.

11. Arrangement according to claim 10, **characterised in that** the wall plate (11, 21) faces the inner side of the vehicle.

## Revendications

1. Béquille (1) notamment destinée à procurer un appui à des remorques, munie d'un élément d'appui (2) doué de mobilité télescopique dans le sens de sa hauteur, composé d'un manchon extérieur (20) et d'un manchon intérieur (10), chaque manchon (10, 20) présentant une section transversale rectangulaire comptant respectivement quatre parois latérales (12a-d, 22a-d, 312-315), **caractérisée par le fait qu'**au moins une paroi latérale (12d, 22d, 315), constituant au moins le manchon intérieur (10), comporte une platine de cloisonnement additionnelle (11, 21) ou est formée d'une platine de cloisonnement (11, 21) sur laquelle les deux parois latérales limitrophes (12a, 12c, 22a, 22c, 312, 314) sont rapportées par soudage.

2. Béquille selon la revendication 1, **caractérisée par le fait que** le cordon de soudure (16, 17) est situé à l'intérieur du manchon (10).

3. Béquille selon la revendication 1 ou 2, **caractérisée par le fait que** le cordon de soudure (16, 17, 26, 27) est situé à la face externe du manchon (10, 20).

4. Béquille selon l'une des revendications 1 à 3, **caractérisée par le fait que** la platine de cloisonnement (11, 21) est en saillie ou dépasse par rapport aux parois latérales limitrophes (12a, 12c, 22a, 22c).

5. Béquille selon l'une des revendications 1 à 4, **caractérisée par le fait que** le manchon intérieur (10), de même que le manchon extérieur (20), sont respectivement munis d'au moins une platine de cloisonnement (11, 21).

6. Béquille selon l'une des revendications 1 à 5, **caractérisée par le fait que** les parois latérales (12a, 12c) limitrophes de la platine de cloisonnement (11) du manchon intérieur (10), et/ou les parois latérales (22a, 22c) du manchon extérieur (20) limitrophes de la platine de cloisonnement (21), sont respectivement pourvues d'une zone de cloisonnement (28, 29) évasée.

7. Béquille selon l'une des revendications 1 à 6, **caractérisée par le fait que** le manchon (10, 20) comporte quatre platines de cloisonnement (11, 11a-c, 21, 21a-c).

8. Béquille selon l'une des revendications 1 à 6, **caractérisée par le fait que** le manchon (10, 20) comprend une platine de cloisonnement (11, 21) et un profilé en U (15, 25), ou une platine de cloisonnement (11, 21) et deux profilés en cornière (101, 102, 201, 202).

9. Béquille selon l'une des revendications 1 à 6, **caractérisée par le fait que** le manchon (10, 20) comporte une tubulure à quatre coins (300), au moins une platine de cloisonnement (11, 21) étant fixée à au moins une face externe.

10. Agencement d'une béquille à la face inférieure d'un véhicule, en particulier d'une remorque, ladite béquille étant munie d'un élément d'appui (2) doué de mobilité télescopique dans le sens de sa hauteur, composé d'un manchon extérieur (20) et d'un manchon intérieur (10), chaque manchon (10, 20) présentant une section transversale rectangulaire comptant respectivement quatre parois latérales (12a-d, 22a-d, 312-315), **caractérisé par le fait qu'**au moins une paroi latérale (12d, 22d, 315), constituant au moins le manchon intérieur (10), comporte une platine de cloisonnement additionnelle (11, 21) ou est formée d'une platine de cloisonnement (11, 21) sur laquelle les deux parois latérales limitrophes (12a, 12c, 22a, 22c) sont rapportées par soudage ; et **par le fait qu'**au moins une platine de cloisonnement (11, 21) est orientée parallèlement à la direction du déplacement.

11. Agencement selon la revendication 10, **caractérisé par le fait que** la platine de cloisonnement (11, 21) est tournée vers la face interne du véhicule.
